# EUROPEAN PATENT APPLICATION

(11) **EP 3 439 434 A1**
(43) Date of publication of application: **06.02.2019**
(21) Application number: 18180447.7
(22) Date of filing: 28.06.2018
(51) Int. Cl.: H05B 33/08

(54) **ULTRAVIOLET LIGHT IRRADIATION APPARATUS**

(30) Priority: 31.07.2017 JP 2017148124
(71) Applicant: Panasonic Industrial Devices SUNX Co., Ltd., Kasugai-shi, Aichi 486-0901 (JP)
(72) Inventor: OHMORI, Takeshi, Osaka-shi, Osaka 541-0043 (JP); IMAI, Kanto, Kasugai-shi, Aichi 486-0901 (JP)
(74) Representative: Daub, Thomas

(57) **Abstract**

An ultraviolet light irradiation apparatus includes: a head including an ultraviolet LED; and a controller. The ultraviolet light irradiation apparatus further includes: a current detection resistor which is electrically connected to the ultraviolet LED and detects a current flowing through the ultraviolet LED. The controller includes: a power setting unit which sets an output power such that the ultraviolet LED emits ultraviolet light intermittently or in plural steps; a current adjustment unit which adjusts the current supplied to the ultraviolet LED according to the output power set by the power setting unit; and an output voltage supply unit which supplies a voltage to the ultraviolet LED. The output voltage supply unit adjusts the voltage supplied to the ultraviolet LED according to the current that is supplied to the ultraviolet LED and adjusted according to the output power set by the power setting unit.

## Description

### CROSS-REFERENCES TO RELATED APPLICATIONS

This application is based on and claims priority from Japanese Patent Application No. 2017-148124 filed on July 31, 2017, the entire contents of which are incorporated herein by reference.

### FIELD

One or more embodiments of the present invention relate to an ultraviolet light irradiation apparatus.

### BACKGROUND

There is an ultraviolet light irradiation apparatus which irradiate an irradiation target such as an ultraviolet-curing adhesive or coating material and thereby harden it (refer to JP-A-2006-51790, for example).

The ultraviolet light irradiation apparatus disclosed in JP-A-2006-51790 includes a head having an ultraviolet LED (light-emitting diode) which emits ultraviolet light and a controller which is connected to the head by a cable. The ultraviolet LED of the head is turned on when supplied with a current from the controller via the cable.

Such an ultraviolet light irradiation apparatus is configured in such a manner that the output power of the ultraviolet LED can be varied. More specifically, the output power of the ultraviolet LED is set using an operation unit (in JP-A-2006-51790, setting unit) which is provided on the controller side. A control unit adjusts the current to be supplied to the ultraviolet LED on the basis of this set value.

### SUMMARY

In the ultraviolet light irradiation apparatus as described above, although the output power of the ultraviolet LED can be varied, there exists a large difference in the forward voltage of the ultraviolet LED between a state that the output power is set highest and a state that it is set lowest (excluding a power-off state). For example, if the output voltage supplied to the ultraviolet LED is fixed at a constant value, the different between the output voltage and the forward voltage becomes large and results in heat generation.

One or more embodiments of the present invention have been made to solve the above problem, and an object thereof is to provide an ultraviolet light irradiation apparatus capable of suppressing heat generation.

In an aspect of the present invention, there is provided an ultraviolet light irradiation apparatus including: a head including an ultraviolet LED which emits ultraviolet light; and a controller which is electrically connected to the head by a connection cable and turns on the ultraviolet LED by supplying a current to the ultraviolet LED via the connection cable, wherein the ultraviolet light irradiation apparatus further includes: a current detection resistor which is electrically connected to the ultraviolet LED and detects a current flowing through the ultraviolet LED, wherein the controller includes: a power setting unit which sets an output power such that the ultraviolet LED emits ultraviolet light intermittently or in plural steps; a current adjustment unit which adjusts the current supplied to the ultraviolet LED according to the output power set by the power setting unit; and an output voltage supply unit which supplies a voltage to the ultraviolet LED, and wherein the output voltage supply unit adjusts the voltage supplied to the ultraviolet LED according to the current that is supplied to the ultraviolet LED and adjusted according to the output power set by the power setting unit.

In this configuration, since the output voltage supply unit adjusts the voltage supplied to the ultraviolet LED according to a current flowing through the ultraviolet LED, the voltage supplied to the ultraviolet LED is varied instead of being fixed. Supply of a useless voltage component and resulting heat generation are suppressed by lowering the voltage supplied to the ultraviolet LED as the current flowing through the ultraviolet LED becomes smaller.

In the above ultraviolet light irradiation apparatus, the head may be detachably attachable to the controller via the connection cable.

In this configuration, since the head can be detached from the controller, ultraviolet LEDs having different peak wavelengths can be used.

In the above ultraviolet light irradiation apparatus, the ultraviolet light irradiation apparatus may further include a voltage measuring unit which measures a voltage across the ultraviolet LED during emission of the ultraviolet light, and the output voltage supply unit may adjust the voltage supplied to the ultraviolet LED according to the voltage measured by the voltage measuring unit which varies depending on the current that is supplied to the ultraviolet LED and adjusted according to the output power set by the power setting unit.

In this configuration, since the voltage supplied to the ultraviolet LED is adjusted according to the forward voltage of the ultraviolet LED measured by the voltage measuring unit, the voltage supplied to the ultraviolet LED is varied instead of being fixed. Supply of a useless voltage component and resulting heat generation are suppressed by lowering the voltage supplied to the ultraviolet LED as the voltage across the ultraviolet LED becomes lower.

In the above ultraviolet light irradiation apparatus, the ultraviolet light irradiation apparatus may further include a voltage measuring unit which measures a voltage across the current detection resistor and a voltage across the ultraviolet LED, and the output voltage supply unit may adjust the voltage supplied to the ultraviolet LED according to the voltages measured by the voltage measuring unit that vary depending on the current that is supplied to the ultraviolet LED and adjusted according to the output power set by the power setting unit.

According to this configuration, since the voltage supplied to the ultraviolet LED is adjusted according to the voltage across the current detection resistor and the voltage across the ultraviolet LED (i.e., the sum of the voltage across the current detection resistor and the voltage across the ultraviolet LED), it is not necessary to calculate a voltage across the current detection resistor on the basis of its resistance on its specification and a current value. That is, by also measuring a voltage across the current detection resistor, a value obtained is not affected by a resistance error within a resistance range in the specification of the current detection resistor and hence a more accurate voltage can be obtained.

In the above ultraviolet light irradiation apparatus, when the output power of the ultraviolet LED is varied, the output voltage supply unit may adjust the voltage supplied to the ultraviolet LED according to the voltage measured by the voltage measuring unit with a predetermined initial output voltage as a reference.

In this configuration, since the predetermined initial output voltage is used as a reference, it is not necessary to determine, that is, calculate, an output voltage to be employed in an initial state on the basis of other values such as a measurement value, which makes it possible to decrease the load of a CPU etc.

In the above ultraviolet light irradiation apparatus, the initial output voltage may be higher than a sum of a forward voltage of the ultraviolet LED in a state in which the output power of the ultraviolet LED is at a maximum and a voltage across the current detection resistor.

According to this configuration, since the initial output voltage is higher than the sum of a forward voltage of the ultraviolet LED in a state that the output power of the ultraviolet LED is at the maximum and a voltage across the current detection resistor, an event that a voltage supplied to the ultraviolet LED is not sufficiently high can be prevented and hence the ultraviolet LED can be turned on reliably.

In the above ultraviolet light irradiation apparatus, the initial output voltage may be a maximum output voltage of the output voltage supply unit.

In this configuration, since the initial output voltage is the maximum output voltage of the output voltage supply unit, a voltage can be supplied to the ultraviolet LED without the need for performing a fine control.

In the above ultraviolet light irradiation apparatus, in a case in which the output power of the ultraviolet LED lowers when the output power of the ultraviolet LED is varied, the output voltage supply unit may use a voltage that has been supplied from the output voltage supply unit to the ultraviolet LED before a change of the output power as an initial output voltage after the change of the output power.

In this configuration, if the output power of the ultraviolet LED lowers when the output power of the ultraviolet LED is varied, a voltage that was supplied from the output voltage supply unit to the ultraviolet LED before the change of the output power is used as an initial output voltage for a control performed after the output power change. This makes it possible to suppress heat generation further because this initial output voltage of the output voltage supply unit for a control performed after the output power change is closer to a forward voltage of the ultraviolet LED than a maximum output voltage of the output voltage supply unit.

The ultraviolet light irradiation apparatus according to one or more embodiments of the present invention can suppress heat generation.

### BRIEF DESCRIPTION OF DRAWINGS

Fig. 1 is a perspective view of an ultraviolet light irradiation apparatus according to an embodiment of the present invention.
Fig. 2 is a perspective view, as viewed from a different direction than in Fig. 1, of the ultraviolet light irradiation apparatus according to the embodiment.
Fig. 3 is a block diagram showing the electrical configuration of the ultraviolet light irradiation apparatus according to the embodiment.
Fig. 4 is a timing chart for description of an example operation of the ultraviolet light irradiation apparatus according to the embodiment.
Fig. 5 is another timing chart for description of the example operation of the ultraviolet light irradiation apparatus according to the embodiment.
Fig. 6 shows a memory table that is employed in an ultraviolet light irradiation apparatus according to a modification.
Fig. 7 is a timing chart illustrating an example operation of an ultraviolet light irradiation apparatus according to another modification.
Fig. 8 is a timing chart illustrating an example operation of an ultraviolet light irradiation apparatus according to a further modification.

### DETAILED DESCRIPTION

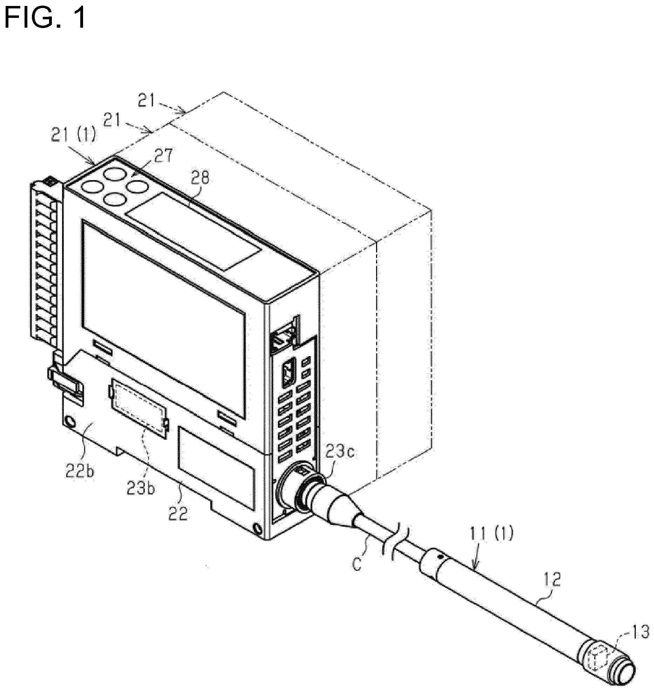

An ultraviolet light irradiation apparatus 1 according to an embodiment of the present invention will be hereinafter described. As shown in Fig. 1, the ultraviolet light irradiation apparatus 1 is equipped with an irradiation unit 11 as a head and a controller unit 21 as a controller. The irradiation unit 11 and the controller unit 21 are connected to each other by a connection cable C.

### (Irradiation unit 11)

In the irradiation unit 11, the connection cable C is connected to a base-side end portion of an approximately cylindrical body 12 and its tip-side end portion is provided with an ultraviolet LED 13 capable of emitting ultraviolet light. The ultraviolet LED 13 can emit ultraviolet light when supplied with power from the controller unit 21 via the connection cable C.

### (Controller unit 21)

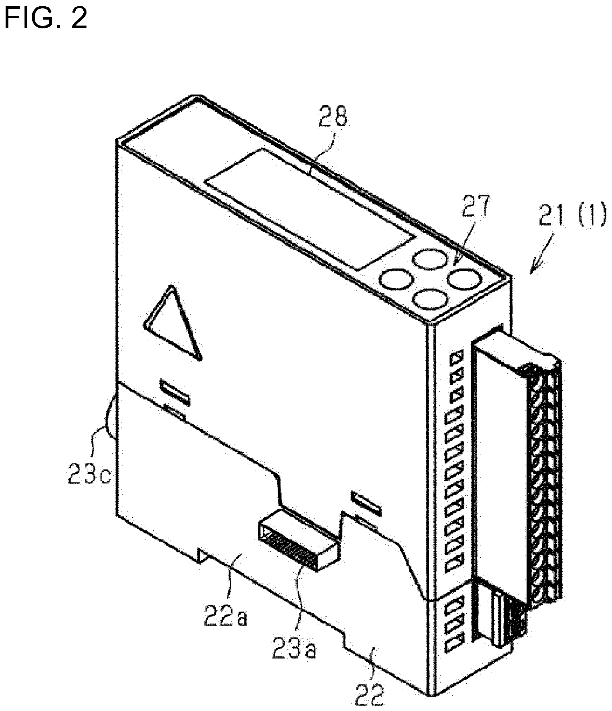

As shown in Figs. 1 and 2, the controller unit 21 is equipped with a male connector 23a which project from a side surface 22a of a chassis 22, a female connector 23b which is provided on a side surface 22b, opposite to the side surface 22a, of the chassis 22, and a cable connection connector 23c to which the irradiation unit 11 is connected by the cable C. When the above controller unit 21 is connected to other controller units 21 (indicated by broken lines in Fig. 1) using the connectors 23a and 23b, the controller units 21 can communicate with each other.

Since the controller unit 21 is equipped with the cable connection connector 23c, the irradiation unit 11 can be attached to the controller unit 21 in a detachable manner, which makes it possible to switch between irradiation units 11. Examples of the ultraviolet LED 13 of the irradiation unit 11 are ones whose peak wavelengths are 365 nm, 385 nm, 405 nm. Examples of the cable C are ones having lengths of 2 m, 5 m, and 10 m.

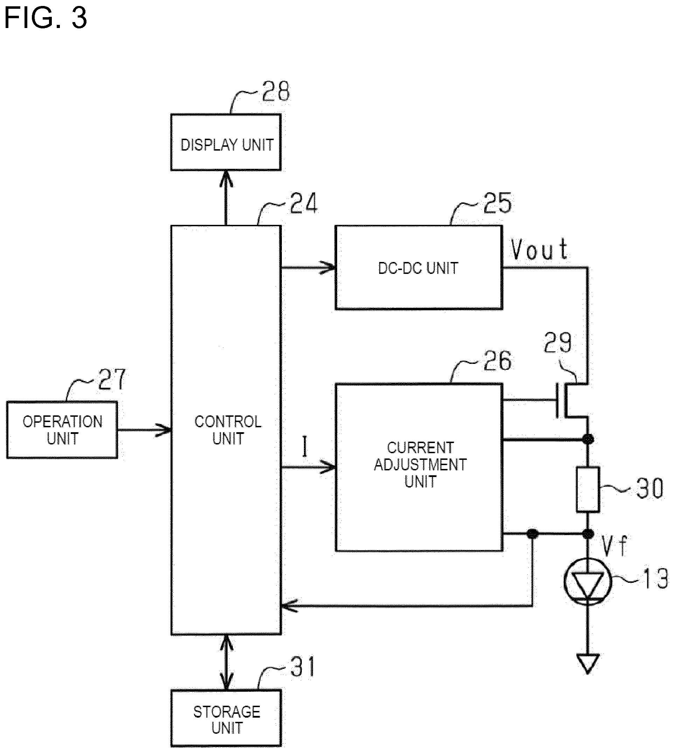

Next, the electrical configuration of the controller unit 21 will be described. As shown in Fig. 3, a control unit 24 of the controller unit 21 consists of a CPU etc. and is electrically connected to a DC-DC unit 25, a current adjustment unit 26, an operation unit 27, and a display unit 28.

The DC-DC unit 25 is a DC-DC converter for generating an output voltage Vout to be supplied to the ultraviolet LED 13 (load side) by changing an input voltage received. In the embodiment, the DC-DC unit 25 lowers a DC voltage of 24 V, for example, and supplies a resulting voltage to the ultraviolet LED 13. The DC-DC unit 25 outputs an output voltage Vout that has been set by the control unit 24 to the ultraviolet LED 13 (load). A switching element 29, a current detection resistor 30, and the ultraviolet LED 13 are connected to the load side of the DC-DC unit 25. The ultraviolet LED 13 is grounded.

A maximum value of the output voltage (supply voltage) Vout of the DC-DC unit 25 is set taking into consideration a voltage Vmax of the ultraviolet LED 13 that occurs when the forward current If of the ultraviolet LED 13 is set at a maximum value in a range in the specification of the ultraviolet light irradiation apparatus 1, a voltage Vr across the current detection resistor 30 (described later), and other factors. The maximum value of the output voltage Vout of the DC-DC unit 25 is set at a value that is relatively close to the voltage Vmax of the ultraviolet LED 13 that occurs when its forward current If is set at the maximum value, whereby useless power consumption and heat generation are suppressed.

For example, an FET (field-effect transistor) or a bipolar transistor can be employed as the switching element 29.

The current adjustment unit 26 adjusts the output power of the ultraviolet LED 13 by on/off-switching the switching element 29. Furthermore, the current adjustment unit 26 detects a current Ir flowing through the current detection resistor 30 which is connected between the load side of the switching element 29 and the anode side of the ultraviolet LED 13. Since the current Ir flowing through the current detection resistor 30 is the same as a forward current If of the ultraviolet LED 13 which is series-connected to the current detection resistor 30, the current (forward current) If flowing through the ultraviolet LED 13 can be monitored substantially by detecting the current Ir.

The control unit 24 measures a forward voltage Vf across the ultraviolet LED 13 by means of a power measuring unit (not shown).

In general, a drive circuit for driving the ultraviolet LED 13 is designed according to its specification etc. so as to be able to provide a current and a voltage that are necessary to drive it. During that course, a power source voltage (output voltage) and a forward current If that allow the ultraviolet LED 13 to be driven reliably are determined and a resistance of the current detection resistor 30 is determined according to a forward voltage Vf of the ultraviolet LED 13, a product specification, etc. As a result, usually, the output voltage Vout is fixed at a constant value. Whereas power that is supplied to the ultraviolet LED 13 is converted into light, part, not converted into light, of the power supplied is converted into heat. That is, the output voltage Vout and the forward voltage Vf is large and their difference results in heat generation.

In view of the above, the control unit 24 employed in the embodiment calculates a voltage Vr across the current detection resistor 30 on the basis of a current If flowing through the current detection resistor 30 that is detected by the current adjustment unit 26 and a known resistance of the current detection resistor 30. The control unit 24 sets, as an output voltage Vout of the DC-DC unit 25, the sum of the forward voltage Vf, the voltage Vr across the current detection resistor 30, and a correction value ΔV that is obtained in advance by an experiment (i.e., Vout = Vf + Vr + ΔV). An output voltage Vout of the DC-DC unit 25 at a start of driving is set at a predetermined initial output voltage Vst. The initial output voltage Vst is set at a maximum value (maximum output voltage) that the DC-DC unit 25 can output as the output voltage Vout, and is higher than the sum of a voltage Vmax of the ultraviolet LED 13 that occurs when the forward current If (output power) of the ultraviolet LED 13 is set at a maximum value in a range in the specification of the ultraviolet light irradiation apparatus 1 and the voltage Vr across the current detection resistor 30. As a result, an event can be prevented that with the initial output voltage Vst the ultraviolet LED 13 is not turned on because a voltage applied to it is not sufficiently high.

The display unit 28 which is connected to the control unit 24 serves to display various kinds of information to a user.

Since a storage unit 31 is connected to the control unit 24, each of the irradiation power (output power) and the irradiation time, for example, can be set at plural values or times. That is, irradiation can be performed by combining plural steps that are different from each other in irradiation power. This setting can be made using the operation unit 27, and resulting set information is stored in the storage unit 31.

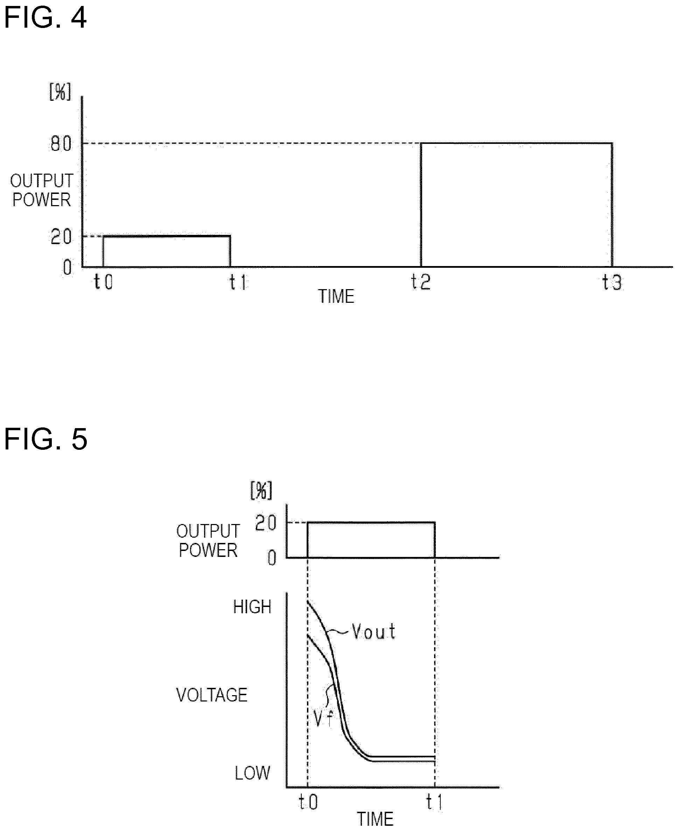

Next, an example operation (workings) of the ultraviolet light irradiation apparatus 1 will be described mainly with reference to Figs. 4 and 5.

First, a user sets output powers and irradiation times at the respective output powers using the operation unit 27. The following description will be made with an assumption that the output power and the irradiation time are set at 20% and 2 sec as a first step, at 0% and 3 sec as a second step, and at 80% and 3 sec as a third step. This setting may be made by a method using an external device such as a programmable controller or a personal computer, instead of using the operation unit 27.

After making the above setting, the user operates a drive button (not shown) in the operation unit 27, whereupon the control unit 24 starts operating according to the above setting results.

First, the control unit 24 sets a set current I for the current adjustment unit 26 and sets an output voltage Vout for the DC-DC unit 25.

More specifically, as shown in Fig. 4, at a first step start time point t0, the control unit 24 sets, for the current adjustment unit 26, a set current I corresponding to an output power 20% and also sets, for the DC-DC unit 25, an initial output voltage Vst that is a maximum output voltage Vout that the DC-DC unit 25 can output.

The current adjustment unit 26 controls the switching element 29 so that the current Ir flowing through the current detection resistor 30 becomes equal to the set current I. The DC-DC unit 25 operates so as to generate the set initial output voltage Vout.

Then the control unit 24 sets, every prescribed cycle (e.g., every 50 ms), the sum of a forward current Vf of the ultraviolet LED 13, a voltage Vr across the current detection resistor 30, and a correction value ΔV that is obtained in advance by an experiment as an output voltage Vout of the DC-DC unit 25. As a result, as shown in Fig. 5, the difference between the output voltage Vout and the forward voltage Vf decreases as time elapses, whereby supply of a useless voltage component and resulting heat generation are suppressed.

Subsequently, at a time point t1 when switching made from the first step to the second step, the control unit 24 sets a set current I (0 A) corresponding to an output power 0% for the current adjustment unit 26. An output voltage Vout is also equal to 0 V. That is, at the second step, no power (current) is supplied to the ultraviolet LED 13 and hence it is rendered in an off state.

Subsequently, at a time point t2 when switching made from the second step to the third step, the control unit 24 sets a set current I corresponding to an output power 80% for the current adjustment unit 26 and sets the output voltage Vout for the DC-DC unit 25 at the time point t2. The maximum initial output voltage Vst is set among output voltage Vout at the time point t2.

The current adjustment unit 26 controls the switching element 29 so that the current Ir flowing through the current detection resistor 30 becomes equal to the set current I. The DC-DC unit 25 operates so as to generate the set initial output voltage Vout.

Then the control unit 24 sets, every prescribed cycle (e.g., 50 ms), the sum of a forward current Vf of the ultraviolet LED 13, a voltage Vr across the current detection resistor 30, and a correction value ΔV that is obtained in advance by an experiment as an output voltage Vout of the DC-DC unit 25.

Subsequently, at an end time point t3 of the third step, the control unit 24 a set current I being equal to 0A and an output voltage Vout being equal to 0 V to stop the supply of power (current) to the ultraviolet LED 13 and finishes the operation of the ultraviolet light irradiation apparatus 1.

Next, advantages of the embodiment will be described.
(1) Since the DC-DC unit 25 adjusts the voltage Vout supplied to the ultraviolet LED 13 according to a current flowing through the ultraviolet LED 13 according to a control by the control unit 24, the voltage Vout supplied to the ultraviolet LED 13 is varied instead of being fixed. Supply of a useless voltage component and resulting heat generation are suppressed by lowering the voltage Vout supplied to the ultraviolet LED 13 as the current flowing through the ultraviolet LED 13 becomes smaller.
(2) Since the irradiation unit 11 can be detached from the controller unit 21, it is possible to use ultraviolet LEDs 13 having different peak wavelengths or cables C having different lengths. The forward voltage Vf varies due to a difference in the peak wavelength of the ultraviolet LED 13, or the resistance varies due to a difference in the length of the cable C. However, varied in the above-described manner, the output voltage Vout supplied to the ultraviolet LED 13 is such as to accommodate such a difference in the forward voltage Vf or the resistance. As a result, heat generation can be suppressed even in the case where irradiation units 11 are used that employ ultraviolet LEDs 13 having different peak wavelengths or cables C having different lengths, respectively.
(3) In the ultraviolet light irradiation apparatus 1 having the above-described configuration, one irradiation unit 11 is connected to one controller unit 21. Thus, the overall size of the controller unit 21 can be made smaller than in a configuration in which plural heads are connected to one controller unit. As a result, the inside space of the controller unit 21 is made narrower, which requires that heat generation be suppressed. In view of this, to adjust the output voltage Vout to be supplied to the ultraviolet LED 13 according to the forward voltage Vf of the ultraviolet LED 13 measured by the control unit 24, the output voltage Vout is varied instead of being fixed. More specifically, the output voltage Vout to be supplied to the ultraviolet LED 13 is lowered as the forward voltage Vf of the ultraviolet LED 13 decreases. As a result, supply of a useless voltage component and resulting heat generation are suppressed.
(4) Since the predetermined initial output voltage Vst is used as a reference voltage, it is not necessary to determine, that is, calculate, an output voltage Vout to be employed in an initial state on the basis of other values such as a measurement value, which makes it possible to decrease the load of the control unit 24 which consists of a CPU etc.
(5) Since the initial output voltage Vst is higher than the sum of a voltage Vf (Vmax) of the ultraviolet LED 13 that occurs when the output power of the ultraviolet LED 13 is set at a maximum value and a voltage Vr across the current detection resistor 30, an event that a voltage supplied to the ultraviolet LED 13 is not sufficiently high can be prevented and hence the ultraviolet LED 13 can be turned on reliably.
(6) Since the initial output voltage Vst is a maximum output voltage of the DC-DC unit 25, a voltage can be supplied to the ultraviolet LED 13 without the need for performing a fine control.

The above-described embodiment may be modified in the following manners.
- Although in the embodiment one irradiation unit 11 (head) is connected to one controller unit 21, the invention is not limited to this case. For example, a configuration is possible in which plural irradiation units are connected to one controller unit. This configuration may be such that plural drive circuits are provided in the controller unit so as to correspond to the respective heads or that a single drive circuit is switched so as to drive the plural irradiation units.
- In the embodiment, the initial output voltage Vst which is used at the time of a start of each step excluding the step of a 0% output power and is set at a voltage that is higher than the sum of a forward voltage Vf (Vmax) of the ultraviolet LED 13 that occurs when the output power of the ultraviolet LED 13 is at the maximum and a voltage Vr across the current detection resistor 30. However, the invention is not limited to this case.

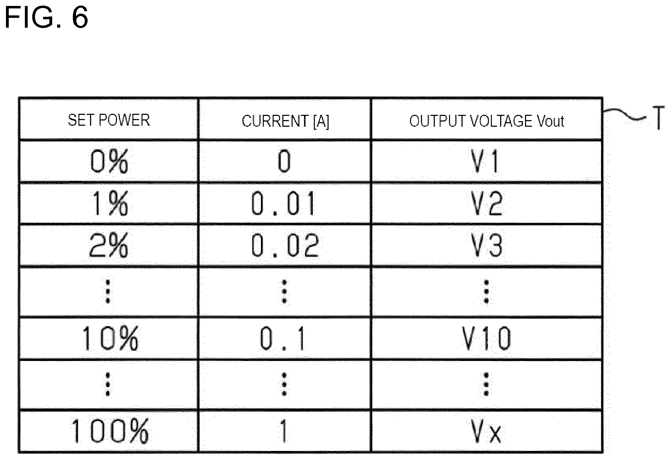

For example, as shown in Fig. 6, a configuration is possible in which the storage unit 31 is stored in advance with a memory table T indicating a relationship between the current (forward current If) corresponding to the output power and the output voltage Vout and an output power Vout is determined (set) by referring to the memory table T.

As a further medication, based on a relationship between the current (forward current If) corresponding to the output power and the output voltage Vout, an output power Vout is determined (set) by multiplying a forward voltage Vf by a coefficient α.
- Although in the embodiment a forward voltage Vf is detected every prescribed interval (e.g., every 50 µs) between steps, the invention is not limited to this case. For example, a configuration is possible in which a forward voltage Vf is detected every prescribed interval only during a prescribed period from a start of each step. Even another configuration is possible in which a forward voltage Vf is detected from a start of each step until the difference between the output voltage Vout and the forward voltage Vf becomes smaller than or equal to a prescribed value.
- Although in the embodiment a calculation value obtained by multiplying a measured current Ir (= (forward current If)) by the resistance of the current detection resistor 30 is employed as a voltage Vr across the current detection resistor 30, the invention is not limited to this case. A voltage across the current detection resistor 30 may be measured. In this configuration, a voltage Vr obtained is not affected by the difference between the theoretical resistance and an actual resistance of the current detection resistor 30. That is, by also measuring a voltage across the current detection resistor 30, a value obtained is not affected by a resistance error within a resistance range in the specification of the current detection resistor 30 and hence a more accurate voltage Vr can be obtained.
- Although in the embodiment the controller unit 21 incorporates the current detection resistor 30 which is electrically connected to the ultraviolet LED 13 and serves to detect a current flowing through the ultraviolet LED 13,
   the invention is not limited to this case. The current detection resistor 30 may be disposed in the irradiation unit 11.
- Although in the embodiment a period can be set in which the output power is equal to 0%, the invention is not limited to this case. A configuration is possible in which an electric-power-off period or an irradiation-off period can be set.
- Although in the embodiment the ultraviolet LED 13 is caused to emit ultraviolet light intermittently by setting the output power at 0% in the interval between time t1 to time t2, the invention is not limited to this case.

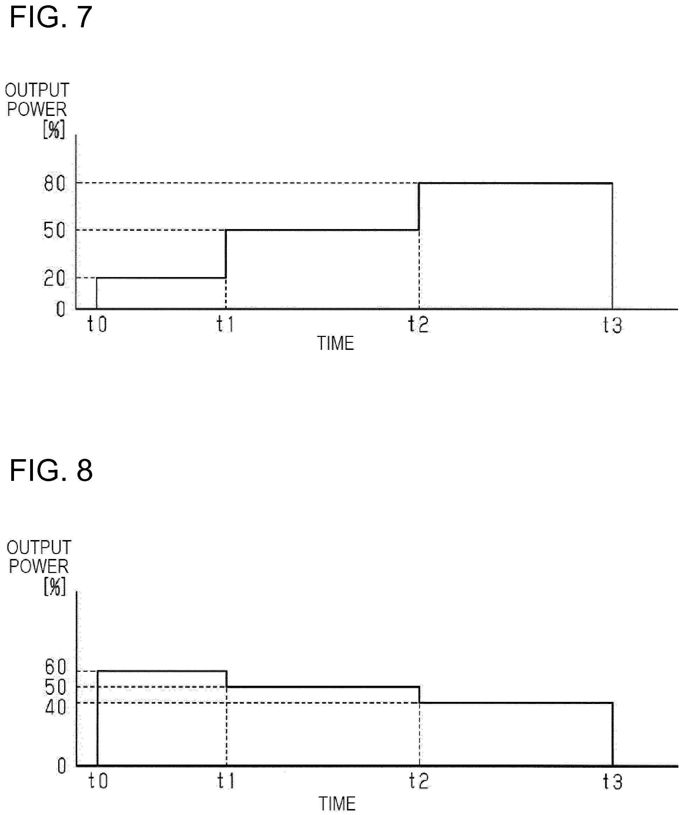

As shown in Fig. 7, a configuration is possible in which the output power of the ultraviolet LED 13 is set at a value (e.g., 50%) that is larger than 0% even in the interval between time t1 to time t2 so that the output power is increased gradually in plural steps.

Even another configuration is possible in which as shown in Fig. 8 the ultraviolet LED 13 emits ultraviolet light in such a manner that the output power decreases gradually. Where the output power of the ultraviolet LED 13 is decreased in this manner, an output voltage Vout before the change of the output power may be used as an initial output voltage Vst for a control performed after the output power change. This makes it possible to suppress heat generation further because this initial output voltage Vst is closer to a forward voltage Vf of the ultraviolet LED 13 than the maximum output voltage of the DC-DC unit 25.
- The above-described embodiment and modifications may be combined as appropriate.

Next, the technical idea which can be obtained from the above-described embodiment and other examples is additionally described as follows:
(Supplement 1) The ultraviolet light irradiation apparatus according to any one of claims 1 to 8, wherein the current detection resistor is incorporated in the controller.

Since no current detection resistor which can be a heat source is provided on the head side, an additional advantage is obtained that temperature increase of the head and hence resulting output power reduction of the ultraviolet LED can be suppressed.

## Claims

1. An ultraviolet light irradiation apparatus comprising:
a head comprising an ultraviolet LED which emits ultraviolet light; and
a controller which is electrically connected to the head by a connection cable and turns on the ultraviolet LED by supplying a current to the ultraviolet LED via the connection cable,
wherein the ultraviolet light irradiation apparatus further comprises: a current detection resistor which is electrically connected to the ultraviolet LED and detects a current flowing through the ultraviolet LED,
wherein the controller comprises:
a power setting unit which sets an output power such that the ultraviolet LED emits ultraviolet light intermittently or in plural steps;
a current adjustment unit which adjusts the current supplied to the ultraviolet LED according to the output power set by the power setting unit; and
an output voltage supply unit which supplies a voltage to the ultraviolet LED, and
wherein the output voltage supply unit adjusts the voltage supplied to the ultraviolet LED according to the current that is supplied to the ultraviolet LED and adjusted according to the output power set by the power setting unit.

2. The ultraviolet light irradiation apparatus according to claim 1,
wherein the head is detachably attachable to the controller via the connection cable.

3. The ultraviolet light irradiation apparatus according to claim 1 or 2, further comprising:
a voltage measuring unit which measures a voltage across the ultraviolet LED during emission of the ultraviolet light,
wherein the output voltage supply unit adjusts the voltage supplied to the ultraviolet LED according to the voltage measured by the voltage measuring unit which varies depending on the current that is supplied to the ultraviolet LED and adjusted according to the output power set by the power setting unit.

4. The ultraviolet light irradiation apparatus according to claim 1 or 2, further comprising:
a voltage measuring unit which measures a voltage across the current detection resistor and a voltage across the ultraviolet LED,
wherein the output voltage supply unit adjusts the voltage supplied to the ultraviolet LED according to the voltages measured by the voltage measuring unit that vary depending on the current that is supplied to the ultraviolet LED and adjusted according to the output power set by the power setting unit.

5. The ultraviolet light irradiation apparatus according to claim 3 or 4,
wherein when the output power of the ultraviolet LED is varied, the output voltage supply unit adjusts the voltage supplied to the ultraviolet LED according to the voltage measured by the voltage measuring unit with a predetermined initial output voltage as a reference.

6. The ultraviolet light irradiation apparatus according to claim 5,
wherein the initial output voltage is higher than a sum of a forward voltage of the ultraviolet LED in a state in which the output power of the ultraviolet LED is at a maximum and a voltage across the current detection resistor.

7. The ultraviolet light irradiation apparatus according to claim 6,
wherein the initial output voltage is a maximum output voltage of the output voltage supply unit.

8. The ultraviolet light irradiation apparatus according to claim 5,
wherein in a case in which the output power of the ultraviolet LED lowers when the output power of the ultraviolet LED is varied, the output voltage supply unit uses a voltage that has been supplied from the output voltage supply unit to the ultraviolet LED before a change of the output power as an initial output voltage after the change of the output power.
